# EUROPÄISCHE PATENTSCHRIFT

(11) **EP 4 184 037 B1**
(45) Veröffentlichungstag und Bekanntmachung des Hinweises auf die Patenterteilung: **05.11.2025**
(21) Anmeldenummer: 22196466.1
(22) Anmeldetag: 20.09.2022
(51) Int. Cl.: F16H 39/14, F16H 57/00

(54) **HYDROMECHANISCHES GETRIEBE SOWIE LANDWIRTSCHAFTLICHE ARBEITSMASCHINE MIT EINEM SOLCHEN GETRIEBE**
HYDROMECHANICAL TRANSMISSION AND AGRICULTURAL MACHINE WITH SUCH A TRANSMISSION
TRANSMISSION HYDROMÉCANIQUE ET MACHINE DE TRAVAIL AGRICOLE ÉQUIPÉE D'UNE TELLE TRANSMISSION

(30) Priorität: 22.11.2021 DE 102021130507
(43) Veröffentlichungstag der Anmeldung: 24.05.2023
(73) Patentinhaber: CLAAS Industrietechnik GmbH, 33106 Paderborn (DE)
(72) Erfinder: Gohde, Thomas, 33181 Bad Wünnenberg (DE); Surmann, Sebastian, 33824 Werther (DE); Stertkamp, Helge, 33334 Gütersloh (DE)
(74) Vertreter: CLAAS Gruppe

(56) Entgegenhaltungen:
- EP-A1- 2 960 547
- WO-A2-2008/045368
- DE-A1- 10 008 965
- DE-A1- 102008 008 236
- DE-A1- 102012 004 073
- US-A- 3 401 638

## Beschreibung

Die vorliegende Anmeldung betrifft ein hydromechanisches Getriebe gemäß dem Oberbegriff des unabhängigen Patentanspruchs 1 sowie eine landwirtschaftliche Arbeitsmaschine, insbesondere einen Traktor, gemäß Patentanspruch 12.

Ein leistungsverzweigtes hydromechanisches Getriebe umfasst herkömmlicherweise ein mechanisches Getriebe, wie etwa ein Planetengetriebe, und ein stufenlos verstellbares hydrostatisches Getriebe mit zwei hydrostatischen Einheiten. Die zwei hydrostatischen Einheiten sind in einem Fluidkreislauf zur Übertragung einer Antriebsleistung miteinander verbunden, wobei jeweils eine der hydrostatischen Einheiten als Pumpe und die andere der hydrostatischen Einheiten als Motor arbeitet. Indem beispielsweise bei wenigstens einer dieser beiden hydrostatischen Einheiten durch ein Verschwenken einer Kolbentrommel gegen eine Drehscheibe, an der die Kolben der Kolbentrommel angreifen, das Schluckvolumen bzw. Fördervolumen der entsprechenden hydrostatischen Einheit variiert wird, ist eine stufenlose Verstellung der Übersetzung des hydrostatischen Getriebes realisiert. Da das hydrostatische Getriebe mit dem mechanischen Getriebe wirkverbunden ist, beeinflusst das hydrostatische Getriebe die Drehzahl einer Ausgangswelle des mechanischen Getriebes in Abhängigkeit von dem Übersetzungsverhältnis des hydrostatischen Getriebes.

Die hydrostatischen Einheiten solcher hydrostatischen Getriebe sind in aller Regel in einer sogenannten Lagerbrücke drehbeweglich gelagert, der neben ihrer Funktion als Lager der hydrostatischen Einheiten weitere Funktionen zukommen. So bildet die Lagerbrücke eines hydrostatischen Getriebes einen Leitungsabschnitt des Fluidkreislaufs zur Übertragung der Antriebsleistung aus. Zudem wird an der Lagerbrücke eine sogenannte Stelleinrichtung angebracht bzw. ausgebildet, die dem Verschwenken zur Veränderung des Förder- und/oder Schluckvolumens der hydrostatischen Einheiten dient, wobei die Lagerbrücke zur Betätigung der Stelleinrichtung weitere Kanäle bzw. Bohrungen eines weiteren Fluidkreislaufs zur Versorgung der Stelleinrichtung umfasst. Abgesehen hiervon, wird das hydrostatische Getriebe über die Lagerbrücke an das Getriebegehäuse, in dem sowohl das mechanische Getriebe als auch das hydrostatische Getriebe aufgenommen sind, angebunden.

Ein hydrostatisches Getriebe mit einer solchen Lagerbrücke ist beispielsweise aus der DE 10 2008 008 236 A1 bekannt.

Eine Zielsetzung bei derartigen hydrostatischen Getrieben ist es, eine möglich verlustfreie Strömung des Hydraulikfluids im Hydraulikkreislauf zur Übertragung der Antriebsleistung zu erzeugen, so dass der Betrieb des hydrostatischen Getriebes möglichst gleichmäßig ist und keine unnötig hohen Belastungen der den Hydraulikkreislauf ausbildenden Leitungsabschnitte und Komponenten auftreten. Insbesondere der Übergang von Leitungsabschnitten bzw. Kanälen, die in der Lagerbrücke ausgebildet sind, zu den Kanälen der hydrostatischen Einheiten ist ein besonders kritischer Bereich, in dem derartige Verluste sehr schnell bzw. in erhöhtem Maße auftreten können. Der Grund hierfür liegt darin, dass sich die Stellung der hydrostatischen Einheiten relativ zur Lagerbrücke durch das Verschwenken der hydrostatischen Einheiten zur Veränderung des Förder- und/oder Schluckvolumens stetig verändert, wobei nicht jede der durch die hydrostatischen Einheiten eingenommene Stellung relativ zur Lagerbrücke hinsichtlich des Strömungsverhaltens des Hydraulikfluids als optimal anzusehen ist.

Ausgehend hiervon ist es demnach die Aufgabe der vorliegenden Erfindung, ein hydromechanisches Getriebe anzugeben, das ein hydrostatisches Getriebe umfasst, das sich durch ein optimiertes Strömungsverhalten eines Hydraulikfluids in den Hydraulikleitungen auszeichnet, die der Übertragung der Antriebsleistung dienen.

Diese Aufgabe wird erfindungsgemäß durch die Merkmale des unabhängigen Patentanspruchs 1 gelöst, wobei vorteilhafte Weiterbildungen des erfindungsgemäßen hydromechanischen Getriebes Gegenstand der entsprechenden abhängigen Patentansprüche 2 bis 12 sind.

Demnach betrifft die vorliegende Erfindung ein hydromechanisches Getriebe mit einem mechanischen Getriebe und einem stufenlos verstellbaren hydrostatischen Getriebe, das mit dem mechanischen Getriebe zusammenwirkt. Das mechanische Getriebe und das hydrostatische Getriebe sind in einem Getriebegehäuse aufgenommen, wobei das hydrostatische Getriebe eine als Pumpe wirkende hydrostatische Einheit und eine als Motor wirkende hydrostatische Einheit umfasst, die miteinander zur Übertragung einer Antriebsleistung hydraulisch verbunden sind. Das hydrostatische Getriebe umfasst eine Lagerbrücke, in der die hydrostatischen Einheiten drehbeweglich gelagert sind. Die Lagerbrücke umfasst Kanäle und die hydrostatischen Einheiten umfassen jeweils Kanäle und Öffnungen zur Übertragung der Antriebsleistung, wobei die Öffnungen der hydrostatischen Einheit und die Kanäle der hydrostatischen Einheit hydraulisch miteinander verbunden sind und die Kanäle der Lagerbrücke und die Öffnungen der hydrostatischen Einheiten hydraulisch miteinander verbunden sind. Das hydromechanische Getriebe ist dadurch gekennzeichnet, dass die Geometrie der Kanäle der Lagerbrücke und der Öffnungsquerschnitt der Öffnungen der hydrostatischen Einheiten derart strömungsoptimiert ausgestaltet sind, dass in allen Betriebspunkten des hydromechanischen Getriebes ein hydraulisches Fluid zur Übertragung der Antriebsleistung im Übergangsbereich von den Kanälen der Lagerbrücke zu den Öffnungen der hydrostatischen Einheiten laminar strömt.

Vorzugsweise sind die Geometrie der Kanäle der Lagerbrücke und der Öffnungsquerschnitt der Öffnungen der hydrostatischen Einheiten mittels einer Computational Fluid Dynamics-, CFD-, Simulation derart strömungsoptimiert ausgestaltet sind, dass in allen Betriebspunkten des hydromechanischen Getriebes ein hydraulisches Fluid zur Übertragung der Antriebsleistung im Übergangsbereich von den Kanälen der Lagerbrücke zu den Öffnungen der hydrostatischen Einheiten laminar strömt.

Die im Zusammenhang der Erfindung verwendeten hydrostatischen Einheiten können grundsätzlich von verschiedener Bauart sein. Bevorzugt handelt es sich bei zumindest einer, vorzugsweise bei beiden der hydrostatischen Einheiten, um eine Axialkolbenmaschine mit veränderlichem Förder- bzw. Schluckvolumen. Indem eine, vorzugsweise beide hydrostatischen Einheiten ein veränderliches Förder- bzw. Schluckvolumen aufweisen, lässt sich bei entsprechender hydraulischer Verbindung der hydrostatischen Einheiten durch Volumenänderung einer oder beider Axialkolbenmaschinen eine stufenlos einstellbare Übersetzung zwischen einer als Pumpe und einer als Motor wirkenden hydrostatischen Einheit erzielen. Es sind verschiedene Bauarten von verstellbaren Axialkolbenmaschinen bekannt und im Rahmen der Erfindung einsetzbar.

Durch die erfindungsgemäße Ausgestaltung der die Hochdruck- und Niederdruckseite bildenden Leitungsabschnitte wird das Strömungsverhalten des die Antriebsleistung übertragenden Hydraulikfluids derart eingestellt, dass dieses laminar in den Leitungsabschnitten und den Übergängen der Leitungsabschnitte zueinander strömt und somit im Wesentlichen keine Druckverluste generiert werden. Insbesondere das Strömungsverhalten des Hydraulikfluids im kritischen Bereich der Übergänge wird optimiert, so dass dort keinerlei turbulente Strömungsbereiche erzeugt werden, die den Betrieb des hydrostatischen Getriebes negativ beeinflussen, für einen erhöhten Verschleiß in den Leitungsabschnitten sorgen und somit die Lebensdauer des hydromechanischen Getriebes bzw. des hydrostatischen Getriebes als Teil des hydromechanischen Getriebes reduzieren.

Unabhängig von der konkreten Ausrichtung der Öffnungen der hydrostatischen Einheiten relativ zu den Kanälen der Lagerbrücke im Betrieb des hydromechanischen Getriebes kann durch die erfindungsgemäße Ausgestaltung, insbesondere in dem Übergangsbereich zwischen den Kanälen der Lagerbrücke und den Öffnungen der hydrostatischen Einheiten, stets sichergestellt werden, dass das Hydraulikfluid laminar strömt.

Durch die Anwendung einer CFD-Simulation wird die Geometrie der Kanäle der Lagerbrücke und der Öffnungsquerschnitt der Öffnungen unter Beachtung von Bauraumrestriktionen, Betriebsparametern des hydromechanischen Getriebes und Strömungsparametern des Hydraulikfluids in den Hydraulikleitungen besonders effizient optimiert.

Gemäß der Erfindung ist vorgesehen, dass die Öffnungen der hydrostatischen Einheiten einen rundstirnigen Öffnungsquerschnitt mit zwei parallel zueinander verlaufenden Seiten und zwei halbkreisförmigen, die zwei parallel zueinander verlaufenden Seiten miteinander verbindende, Seiten aufweist.

Die Ausgestaltung des Öffnungsquerschnittes der Öffnungen erlaubt ein gleichmäßiges Einströmen des Hydraulikfluids in die hydrostatischen Einheiten, ohne dass an den Kanten der Öffnungen durch die Querschnittsänderung im Strömungsverlauf des Hydraulikfluids Verwirbelungen im strömenden Hydraulikfluid entstehenden, die bereichsweise zu einem turbulenten Strömungsverhalten des Hydraulikfluids führen könnten.

Gemäß der Erfindung ist vorgesehen, dass die Kanäle der Lagerbrücke jeweils einen geschwungenen Verlauf und einen entlang ihres Verlaufes kreisrunden Querschnitt aufweisen.

Außerdem ist vorgesehen, dass die Kanäle der Lagerbrücke jeweils in einer ersten Ebene zwei Krümmungen und in einer zweiten orthogonal zu der ersten Ebene verlaufenden zweiten Ebene eine Krümmung aufweisen.

Durch den geschwungenen Verlauf der Kanäle der Lagerbrücke strömt das Hydraulikfluid optimal in den entsprechenden in Strömungsrichtung des Hydraulikfluids folgenden Übergangsbereich ein, so dass eine gute Verteilung des Hydraulikfluids im Übergangsbereich sichergestellt wird und eine zielgerichtete Einströmung des Hydraulikfluids in die Öffnungen der hydrostatischen Einheiten erfolgt.

Gemäß einer vorteilhaften Weiterbildung der Erfindung ist vorgesehen, dass die Lagerbrücke ringförmige Ausnehmungen aufweist, die die Kanäle der Lagerbrücke mit den Öffnungen der hydrostatischen Einheiten hydraulisch verbinden, wobei ein Übergang zwischen den Kanälen der Lagerbrücke und den ringförmigen Ausnehmungen in Form einer Düse bzw. eines Diffusors ausgebildet ist.

Durch die ringförmigen Ausnehmungen in der Lagerbrücke wird sichergestellt, dass das Hydraulikfluid unabhängig von der Stellung der hydrostatischen Einheiten relativ zur Lagerbrücke optimal in die Öffnungen der hydrostatischen Einheiten bzw. die Kanäle der Lagerbrücke einströmen kann. Insbesondere in Betriebspunkten, in denen die Öffnungen der hydrostatischen Einheiten nicht mit den Kanälen der Lagerbrücke fluchten, kann durch die ringförmigen Ausnehmungen sichergestellt werden, dass das Hydraulikfluid trotzdem möglichst gleichmäßig in die entsprechenden Leitungsabschnitte einströmt.

Gemäß einer vorteilhaften Weiterbildung der Erfindung ist vorgesehen, dass jede hydrostatische Einheit ein Schwenkgehäuse umfasst, in dem eine Kolbentrommel drehbeweglich aufgenommen ist. Jede hydrostatische Einheit umfasst eine Drehdurchführung und einen Drehzapfen, wobei die Drehdurchführung und der Drehzapfen einer hydrostatischen Einheit an gegenüberliegenden Enden des Schwenkgehäuses der hydrostatischen Einheit ausgebildet sind. Die Öffnungen der hydrostatischen Einheiten sind an der Drehdurchführung ausgebildet.

Bei den als Axialkolbenmaschine in Schrägachsbauart mit einem Schwenkgehäuse ausgeführten hydrostatischen Einheiten lässt sich das Schwenkgehäuse zur Veränderung des Förder- und/oder Schluckvolumens der hydrostatischen Einheit um eine Achse schwenken. Eine Axialkolbenmaschine in Schrägachsbauart umfasst eine Kolbentrommel, die in konstruktiver Hinsicht zweckmäßigerweise jeweils ein mit Zylinderbohrungen versehenes drehbares Kolbengehäuse sowie darin eingesetzte Kolben umfasst, die insbesondere über Kugelgelenke mit einer Triebflanschscheibe verbunden sind, wobei eine Drehachse des Kolbengehäuses mit einer Drehachse der Triebflanschscheibe jeweils einen Schwenkwinkel bildet, der sich durch Verschwenken eines das Kolbengehäuse aufnehmenden Schwenkgehäuses um eine Schwenkachse verändern lässt, um das Förder- und/oder Schluckvolumen der hydrostatischen Einheit zu verändern.

Weiterhin ist es gemäß einer Ausführungsform vorgesehen, dass die Lagerbrücke zwei voneinander beabstandete erste Lageraufnahmen und zwei voneinander beabstandete zweite Lageraufnahmen umfasst. Jeweils eine hydrostatische Einheit ist drehbeweglich um eine Rotationsachse bzw. Schwenkachse in jeweils einer ersten Lageraufnahme und einer zweiten Lageraufnahme gelagert. Die Drehdurchführungen der hydrostatischen Einheiten sind in den zweiten Lageraufnahmen und die Drehzapfen der hydrostatischen Einheiten sind in den ersten Lageraufnahmen drehbeweglich gelagert. Die Kanäle der Lagerbrücke zur Übertragung der Antriebsleistung sind zwischen den zweiten Lageraufnahmen ausgebildet, wobei die ringförmigen Ausnehmungen in den zweiten Lageraufnahmen ausgebildet sind.

Durch die Ausbildung der Öffnungen an der Drehdurchführung, eine Verbindung der zweiten Lageraufnahmen über die Kanäle sowie die Ausbildung der ringförmigen Ausnehmungen in den zweiten Lageraufnahmen wird eine möglichst direkte Strömungsverbindung von den hydrostatischen Einheiten zu einander über die Lagerbrücke erzielt, wobei auf etwaige Schläuche zur Führung des Hydraulikfluids verzichtet werden kann. Auch hierdurch wird das Strömungsverhalten des Hydraulikfluids im Betrieb des hydromechanischen Getriebes erheblich begünstigt und Verluste während der Strömung reduziert.

Gemäß einer vorteilhaften Weiterbildung der Erfindung ist vorgesehen, dass jede hydrostatische Einheit ein hydraulisch wirksames Dämpfungselement umfasst.

Hydrostatische Einheiten verursachen betriebsbedingt hydraulische Druckschwingungen. Bei üblicherweise zum Einsatz kommenden Axialkolbenmaschinen entstehen diese Druckschwingungen durch die Übertragung der mechanischen Kolbenbewegungen in das Druckfluid. Die Druckschwingungen bilden dabei eine Druckwelle aus, deren Wellenlänge abhängig von der Frequenz ist, mit der die Kolben die Druckschwingung einprägen. Es besteht ein direkter Zusammenhang zwischen der Drehzahl einer hydrostatischen Einheit und der Frequenz bzw. Wellenlänge der Druckschwingung.

Abhängig von den jeweiligen geometrischen Abmessungen des hydrostatischen Getriebes besteht die Möglichkeit, dass die halbe Wellenlänge einer Druckschwingung - oder ein beliebiges Vielfaches davon - genau der (baulichen) Länge eines die hydrostatischen Einheiten verbindenden Kanals entspricht. In einem solchen Fall bildet sich in dem Kanal eine stationäre Druckwelle ("stehende Welle") aus, bei welcher die Laufzeit eines Wellenmaximums genau der Zeit entspricht, innerhalb derer beim Schwingungserreger, d.h. einer hydrostatischen Einheit, das nächste Wellenmaximum erzeugt wird. Diese Erscheinung bewirkt, dass sich Wellenmaxima immer weiter verstärken und sich in dem Kanal eine immer höhere Druckamplitude aufbaut. Innerhalb eines aus zwei hydrostatischen Einheiten gebildeten hydraulischen Pumpe-Motor-Kreises mit einer Hochdruckseite und einer Niederdruckseite führt dies dazu, dass einerseits auf der Hochdruckseite ein immer größerer Impuls von dem Kanal auf die tragende mechanische Struktur des hydrostatischen Getriebes, also der Lagerbrücke, insbesondere dem zweiten Lagerbrückenelement, übertragen wird, was störende Betriebsgeräusche verursacht. Andererseits besteht auf der Niederdruckseite die Gefahr, dass der dynamische Druck innerhalb des Kanals sehr weit abfällt, wobei Kavitation, d.h. die Bildung (und anschließende Auflösung) von dampfgefüllten Hohlräumen (Dampfblasen) innerhalb der Hydraulikflüssigkeit, entstehen kann, die ebenfalls störende Betriebsgeräusche erzeugt.

In Kenntnis dieser Ursachen für den innerhalb des hydrostatischen Getriebes entwickelten Lärm ist mit der Bereitstellung eines hydraulisch wirksamen Dämpfungselements eine einfache wie effektive Gegenmaßnahme gefunden worden, mit der sich Überhöhungen des Drucks auf der Hochdruckseite und/oder Druckeinbrüche - und damit Kavitation - auf der Niederdruckseite vermeiden oder zumindest deutlich verringern lassen.

Es kann sich bei derartigen Dämpfungselementen grundsätzlich um verschiedenartige hydraulisch wirksame Einrichtungen handeln, mit denen sich hydraulische Druckschwingungen innerhalb der Kanäle in dem zweiten Lagerbrückenelement dämpfen lassen. Vorzugsweise ist das hydraulisch wirksame Dämpfungselement in diesem Zusammenhang als Helmholtz-Resonator, Lambda/4-Schlauch, hydraulischer Federspeicher, aktiver Dämpfer oder dergleichen ausgebildet.

Besonders bevorzugt ist das hydraulisch wirksame Dämpfungselement als Helmholtz-Resonator ausgebildet.

Ein Helmholtz-Resonator stellt einen akustischen Resonator dar, der im Wesentlichen durch ein federndes Volumen gebildet wird, das zusammen mit einer an die Kanäle angekoppelten Stichleitung ein schwingungsfähiges akustisches System mit einer (oder mehreren) bestimmten Resonanzfrequenz bildet. Bei geeigneter Ausbildung und Anordnung des Helmholtz-Resonators absorbiert dieser auf effektive Weise bestimmte Schwingungsfrequenzen.

Alternativ lässt sich als hydraulisch wirksames Dämpfungselement ein sogenannter Lambda/4-Schlauch verwenden. Dabei ist an die die hydrostatischen Einheiten verbindenden Kanäle ein rohrartiges Element (z.B. Schlauch) mit einer Länge angeschlossen, die einem Viertel der zu bedämpfenden Wellenlänge entspricht. Das rohrartige Element ist an dem den Kanälen abgewandten Ende geschlossen, um dort auftreffende Druckwellen zu reflektieren. Durch die Reflexion nach einem Viertel der Wellenlänge verursacht der Lambda/4-Schlauch einen Phasenversatz der zurücklaufenden Welle von 180° gegenüber der Welle in der Hydraulikleitung, so dass eine Selbstauslöschung der Welle eintritt.

Alternativ oder ergänzend zu den zuvor aufgeführten hydraulisch wirksamen Dämpfungselementen ist es denkbar, ein hydraulisch wirksames Dämpfungselement vorzusehen, das die hydraulischen Schwingungen aktiv bedämpft ("aktiver Dämpfer"). Dazu werden gezielt Korrekturdruckschwankungen (auch bekannt als "Antischall") in die Kanäle eingespeist, welche sich idealerweise mit den betriebsverursachten hydraulischen Druckschwingungen zu Null aufsummieren. Die Korrekturdruckschwankungen könnten beispielsweise mittels eines Piezoaktors als aktivem Dämpfer erzeugt werden, der über ein kleines Volumen an die Kanäle gekoppelt ist. Eine so - oder auf vergleichbare Weise - erzielte aktive Dämpfung bietet den Vorteil, dass sich ohne Veränderung konstruktiver Elemente des Hydrauliksystems hydraulische Druckschwingungen mit unterschiedlicher und/oder mit veränderlicher Frequenz dämpfen lassen.

Gemäß einer vorteilhaften Weiterbildung der Erfindung ist vorgesehen, dass das hydraulisch wirksame Dämpfungselement außen am Schwenkgehäuse der hydrostatischen Einheit angeordnet und mit den Kanälen der hydrostatischen Einheit hydraulisch verbunden ist.

Vorzugsweise ist das hydraulisch wirksame Dämpfungselement unmittelbar angrenzend an die Drehdurchführung außen am Schwenkgehäuse angeordnet.

Besonders bevorzugt ist das hydraulisch wirksame Dämpfungselement am Anfang eines Kanals der hydrostatischen Einheit nah an der Kolbentrommel mit dem Kanal hydraulisch verbunden.

Unabhängig von der Art des gewählten hydraulisch wirksamen Dämpfungselements wird durch die erfindungsgemäße Anordnung außen am Schwenkgehäuse, insbesondere unmittelbar angrenzend an die Drehdurchführung, eine besonders wirksame Bedämpfung erzielt, da die Anordnung in der Nähe eines Schwingungsbauchs der zu bedämpfenden stationären Welle erfolgt. An einer Getriebeanordnung mit wie beschriebenem hydrostatischen Getriebe befindet sich ein Schwingungsbauch (Wellenmaximum) in der Regel in unmittelbarer Nähe einer hydrostatischen Einheit.

Weiterhin hat die Positionierung des hydraulisch wirksamen Dämpfungselements außen am Schwenkgehäuse, zwischen der Drehdurchführung und dem Drehzapfen, einen begünstigenden Einfluss auf die Schaffung von Bauraumrestriktionen.

Gemäß einer vorteilhaften Weiterbildung der Erfindung ist vorgesehen, dass die Lagerbrücke zweigeteilt, ein erstes Lagerbrückenelement und ein zweites Lagerbrückenelement umfassend, ausgebildet ist. Das erste Lagerbrückenelement umfasst Kanäle bzw. Bohrungen, die mit einer Stelleinrichtung des hydrostatischen Getriebes zur Veränderung des Förder- und/oder Schluckvolumens der hydrostatischen Einheiten hydraulisch verbunden sind, und die ersten Lageraufnahmen. Das zweite Lagerbrückenelement umfasst die Kanäle der Lagerbrücke zur Übertragung der Antriebsleistung und die zweiten Lageraufnahmen.

Die zweigeteilte Ausgestaltung der Lagerbrücke des hydrostatischen Getriebes bringt zahlreiche Vorteile mit sich. So reduziert sich das Gewicht des hydrostatischen Getriebes in erheblichem Maße, da die Lagerbrücke nur an den Stellen Material aufweist, an denen es für die entsprechende Funktionserfüllung auch wirklich notwendig ist. Durch die Anordnung der Kanäle für die Übertragung der Antriebsleistung, der sogenannten Hochdruck- bzw. Niederdruckkanäle, im zweiten, im in der landwirtschaftlichen Arbeitsmaschine eingebauten Zustand des hydromechanischen Getriebes unteren, Lagerbrückenelement und der Kanäle bzw. Bohrungen, die mit der Stelleinrichtung des hydrostatischen Getriebes zur Veränderung des Förder- und/oder Schluckvolumens hydraulisch verbunden sind, der sogenannten Steuerdruckkanäle bzw. -bohrungen, im ersten, im in der landwirtschaftlichen Arbeitsmaschine eingebauten Zustand des hydromechanischen Getriebes oberen, Lagerbrückenelements, reduziert sich die Komplexität der Lagerbrücke in erheblichem Maße. So müssen beispielsweise nur die für die Versorgung des jeweiligen Hydraulikkreislaufs notwendigen Anschlüsse an dem entsprechenden Lagerbrückenelement ausgebildet werden. Weiterhin kann die Herstellung der Lagerbrücke vereinfacht werden, da die beiden Lagerbrückenelemente parallel gefertigt werden können. Die Kombination aus reduzierter Komplexität und effizienter Materialverteilung sorgt wiederum dafür, dass im Bereich der Lagerbrücke weniger Bauraumrestriktionen geschaffen werden, so dass eine Anordnung von weiteren Bauteilen, beispielsweise Antriebs-, Abtriebswellen und/oder Kabelsträngen des hydromechanischen Getriebes und/oder der landwirtschaftlichen Arbeitsmaschine, flexibler erfolgen kann.

Gemäß einer vorteilhaften Weiterbildung der Erfindung ist vorgesehen, dass die Lagerbrücke zwei voneinander beabstandete dritte Lageraufnahmen umfasst, wobei mittig durch die dritten Lageraufnahmen verlaufende Achsen parallel zueinander ausgerichtet sind. In jeder dritten Lageraufnahme sind Elemente der hydrostatischen Einheit aufgenommen, die mittels einer Kupplungseinrichtung mit dem mechanischen Getriebe wirkverbunden sind. Die dritten Lageraufnahmen sind mittels eines Steges voneinander beabstandet. Die Teilung der Lagerbrücke verläuft durch den Steg und die dritten Lageraufnahmen der Lagerbrücke.

Vorzugsweise liegen die Achsen der dritten Lageraufnahmen in der Teilungsebene.

Die Teilung im Bereich der dritten Lageraufnahmen erlaubt eine vereinfachte Montage und Wartung des hydromechanischen Getriebes. Durch die Teilung der Lagerbrücke kann die Anbindung des hydrostatischen Getriebes an das mechanische Getriebe besonders unkompliziert und schrittweise erfolgen. Weiterhin ist eine gute Zugänglichkeit der verschiedenen Komponenten des hydromechanischen Getriebes im Wartungsfall gegeben, wobei lediglich einzelne Elemente durch einen Wartungsmonteur entfernt werden müssen. Sofern die durch die dritten Lageraufnahmen verlaufenden Achsen in der Teilungsebene, die im in die landwirtschaftliche Arbeitsmaschine eingebauten Zustand des hydromechanischen Getriebes eine horizontale Ebene darstellt, liegen, ist eine relativ gleichmäßige Kraftleitung durch die Lagerbrücke im Bereich der dritten Lageraufnahmen im Betrieb des hydromechanischen Getriebes sichergestellt. Dies erhöht die Lebensdauer des hydromechanischen Getriebes. Die Verbindung der dritten Lageraufnahmen über einen Steg erlaubt weiterhin, dass benachbart, insbesondere oberhalb und unterhalb des Stegs im eingebauten Zustand des hydromechanischen Getriebes, und somit zwischen der Lagerbrücke weitere Bauteile geführt werden können, so dass sich die Bauraumrestriktionen weiter reduzieren.

Gemäß einer vorteilhaften Weiterbildung der Erfindung ist vorgesehen, dass das hydrostatische Getriebe Dämpfungselemente umfasst, die das hydrostatische Getriebe mit dem Getriebegehäuse nachgiebig verbinden. Die Dämpfungselemente umfassen jeweils einen von einer elastischen Hülse umgebenen Zapfen.

Mittels der Dämpfungselemente kann die Übertragung von Schwingungen vom hydrostatischen Getriebe auf das Getriebegehäuse unterdrückt werden, wodurch das Getriebegehäuse nicht oder allenfalls in geringem Umfang als Resonanzboden wirkt, der die Schwingungen des hydrostatischen Getriebes in die Umgebung abstrahlt. Die Verwendung von Zapfen, die mit einer die Schwingungen des hydrostatischen Getriebes dämpfenden elastischen Hülse umgeben sind, schafft eine Verbindung zwischen Getriebegehäuse und dem hydrostatischen Getriebe, die elastisch und belastbar genug ist, um den zwischen dem hydrostatischen Getriebe und der Umgebung wirkenden Kräften standzuhalten.

Vorzugsweise ist der Zapfen jedes Dämpfungselements integral mit der Lagerbrücke ausgebildet.

Die integrale Ausgestaltung der Zapfen mit der Lagerbrücke schafft eine für die Dämpfung von Schwingungen vorgesehene Struktur ohne Schwachstellen, die zu einem Versagen der Struktur im Betrieb des hydromechanischen Getriebes führen könnten, da auf eine Fixierung des Zapfens an der Lagerbrücke mittels einer Passung verzichtet werden kann.

Gemäß einer vorteilhaften Weiterbildung der Erfindung ist vorgesehen, dass die Dämpfungselemente am zweiten Lagerbrückenelement ausgebildet sind. Die Dämpfungselemente sind achsparallel zu den Achsen der dritten Lageraufnahmen ausgerichtet.

Durch die Anordnung bzw. Ausbildung der Dämpfungselemente am zweiten Lagerbrückenelement kann die Anbindung des hydrostatischen Getriebes an das Getriebegehäuse für einen Monteur besonders unkompliziert realisiert werden. Weiterhin wird durch die axiale Anordnung, also eine Anordnung entlang der Längsachse der landwirtschaftlichen Arbeitsmaschine im Betrieb, eine besonders geringe Schallabstrahlung von dem hydrostatischen Getriebe an das Getriebegehäuse und umgekehrt erzielt.

Gemäß einer vorteilhaften Weiterbildung der Erfindung ist vorgesehen, dass das hydrostatische Getriebe vier Dämpfungselemente aufweist, wobei zu jedem der vier Dämpfungselemente in zwei Raumrichtung beabstandet ein weiteres der vier Dämpfungselement angeordnet ist. Alle vier Dämpfungselemente sind in einer durch die zwei Raumrichtungen aufgespannten Ebene angeordnet.

Vorzugsweise verläuft die Ebene durch die zweiten Lageraufnahmen, insbesondere parallel zu der Teilungsebene der Lagerbrücke.

Diese Anordnung sorgt für eine gleichmäßige Schwingungsdämpfung und schafft nur minimale Bauraumrestriktionen im Bereich um das zweite Lagerbrückenelement herum.

Die erfindungsgemäße Aufgabe wird ferner durch eine landwirtschaftliche Arbeitsmaschine, insbesondere einen Traktor, gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1:: eine schematische und exemplarische Ansicht einer erfindungsgemäßen landwirtschaftlichen Arbeitsmaschine;
- FIG. 2:: eine schematische und exemplarische Ansicht eines erfindungsgemäßen hydromechanischen Getriebes;
- FIG. 3:: eine schematische und exemplarische Ansicht eines hydrostatischen Getriebes des erfindungsgemäßen hydromechanischen Getriebes gemäß FIG. 2;
- FIG. 4:: eine schematische und exemplarische Ansicht einer Lagerbrücke des hydrostatischen Getriebes gemäß FIG. 3;
- FIG. 5: eine schematische und exemplarische Ansicht einer hydrostatischen Einheit des hydrostatischen Getriebes gemäß FIG. 3;
- FIG. 6: eine schematische und exemplarische Vorderansicht eines zweiten Lagerbrückenelements der Lagerbrücke aus FIG. 4; und
- FIG. 7: eine schematische und exemplarische untere Draufsicht des zweiten Lagerbrückenelements aus FIG. 6.

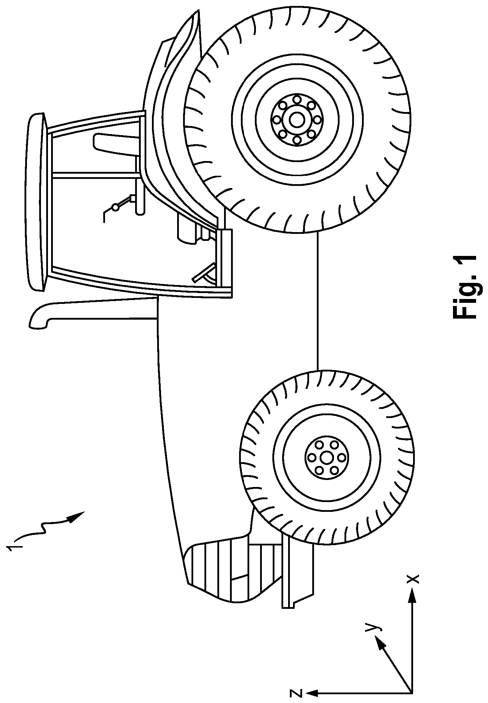

FIG. 1 zeigt eine landwirtschaftliche Arbeitsmaschine 1 in Ausgestaltung eines Traktors, in welcher das erfindungsgemäße leistungsverzweigte hydromechanische Getriebe 2 zum Einsatz kommt.

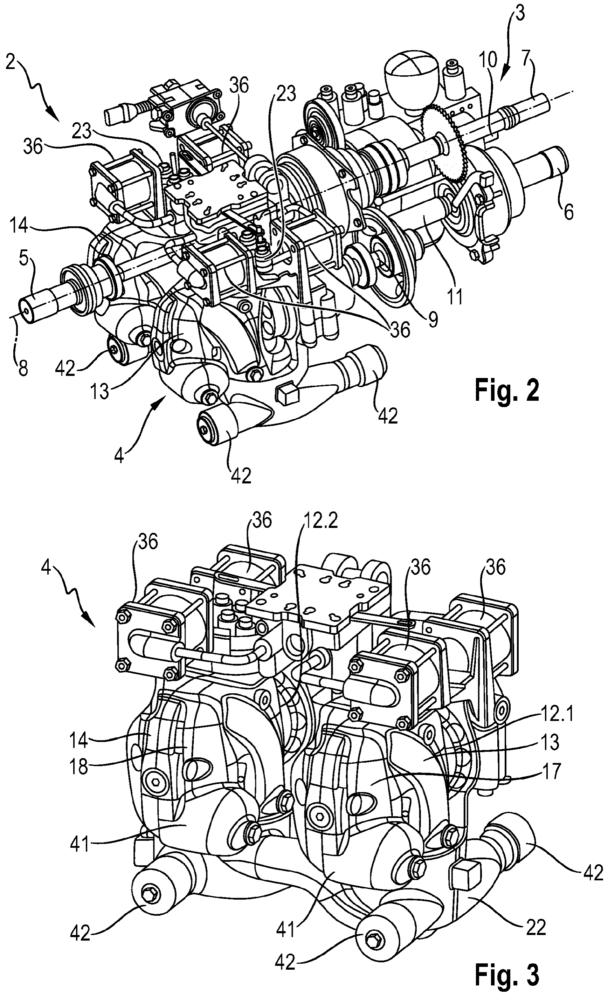

FIG. 2 zeigt eine schematische und exemplarische Darstellung des erfindungsgemäßen hydromechanischen Getriebes 2. Das hydromechanische Getriebe 2 umfasst ein mechanisches Getriebe 3 sowie ein damit wirkverbundenes hydrostatisches Getriebe 4, welches in isolierter Darstellung der FIG. 3 zu entnehmen ist. Das hydromechanische Getriebe 2 umfasst ein in den FIGs. nicht dargestelltes Getriebegehäuse, in dem das mechanische Getriebe 3 und das hydrostatische Getriebe 4 aufgenommen sind. Ein solches hydromechanisches Getriebe 2 bildet einen Teil eines Fahrzeugantriebsstrangs der in FIG. 1 dargestellten landwirtschaftlichen Fahrzeugmaschine 1 und ermöglicht eine stufenlos einstellbare Übersetzung zwischen einer (von einem in den FIGs. nicht dargestellten Antriebsmotor der landwirtschaftlichen Arbeitsmaschine 1 antreibbaren) Getriebeeingangswelle 5 und einer (eine oder mehrere Fahrachsen der landwirtschaftlichen Arbeitsmaschine 1 mit Antriebsleistung versorgenden) Getriebeausgangswelle 6 des hydromechanischen Getriebes 2.

Die mit dem in den FIGs. nicht dargestellten Antriebsmotor der landwirtschaftlichen Arbeitsmaschine 1 in Antriebsverbindung stehende Getriebeeingangswelle 5 des hydromechanischen Getriebes 2 läuft zentral in das hydromechanische Getriebe 2 ein. Dabei liegt die Getriebeeingangswelle 5 mit einer aus dem hydromechanischen Getriebe 2 ausgehenden Zapfwelle 7 auf einer gemeinsamen Achse 8. Die Getriebeeingangswelle 5 und die Zapfwelle 7 sind drehfest miteinander verbunden. Die Drehzahl der Zapfwelle 7 entspricht demnach daher stets zumindest im Wesentlichen der Drehzahl der Getriebeeingangswelle 5.

Die Getriebeeingangswelle 5 ist Teil des mechanischen Getriebes 3 und verläuft durch das hydrostatische Getriebe 4. Zusätzlich zu der Getriebeeingangswelle 5 umfasst das mechanische Getriebe 3 drei Zwischenwellen 9, 10, 11, die jeweils zur Getriebeeingangswelle 5 parallel ausgerichtet sind, demnach achsparallel zu der Getriebeeingangswelle 5 verlaufen. Zwei der drei Zwischenwellen 9, 10 stehen jeweils über eine Kupplungseinrichtung 12.1, 12.2, die jeweils vorzugsweise eine Bogenzahnkupplung umfassen, mit dem hydrostatischen Getriebe 4 des hydromechanischen Getriebes 2 in Wirkverbindung bzw. in Antriebsverbindung. Die dritte Zwischenwelle 11 ist mit der Getriebeausgangswelle 6 wirk- bzw. antriebsverbunden. Das mechanische Getriebe 3 ist als Planetengetriebe konzipiert, auf eine detaillierte Beschreibung des Planetengetriebes wird im Folgenden allerdings verzichtet. Das Planetengetriebe kann als einfacher Planetensatz oder als Stufenplanetengetriebe ausgebildet sein.

Wie zuvor ausgeführt, stehen zwei der drei Zwischenwellen 9, 10 jeweils über eine Kupplungseinrichtung 12.1, 12.2 mit dem hydrostatischen Getriebe 4 des hydromechanischen Getriebes 2, insbesondere mit einer sogenannten hydrostatischen Einheit 13, 14 des hydrostatischen Getriebes 4, in Wirkverbindung bzw. Antriebsverbindung. Allgemein ausgedrückt dient das hydrostatische Getriebe 4 zur Übertragung einer Antriebsleistung, indem eine als Pumpe wirkende hydrostatische Einheit 13; 14 mit einer als Motor wirkenden hydrostatischen Einheit 14; 13 hydraulisch verbunden ist.

Die hydrostatische Einheit 13 ist der Zwischenwelle 9 zugeordnet und über die Kupplungseinrichtung 12.1 mit dieser wirk- bzw. antriebsverbunden. Die hydrostatische Einheit 14 ist der Zwischenwelle 10 zugeordnet und über die Kupplungseinrichtung 12.2 mit dieser wirk- bzw. antriebsverbunden. Die beiden hydrostatischen Einheiten 13, 14 sind über Hydraulikleitungen 15, 16 zur Übertragung der Antriebsleistung hydraulisch miteinander verbunden. Auf diese Weise wird jeweils von der als Pumpe wirkenden hydrostatischen Einheit 13; 14 Antriebsleistung auf die als Motor wirkende hydrostatische Einheit 14; 13 übertragen. In Bezug auf die Zwischenwellen 9, 10 wirkt diese hydraulische Kopplung über Pumpe und Motor wie ein Getriebe, das eine Drehzahlkopplung zwischen den Zwischenwellen 9, 10 herstellt. Abhängig vom Betriebszustand, also einer Funktion der hydrostatischen Einheiten 13, 14 als Pumpe oder Motor, und von einer Schwenkrichtung der hydrostatischen Einheit 13, 14 herrscht dabei entweder in der Hydraulikleitung 15 Niederdruck und in der Hydraulikleitung 16 Hochdruck, oder es herrscht in der Hydraulikleitung 16 Niederdruck und in der Hydraulikleitung 15 Hochdruck.

Bei den hydrostatischen Einheiten 13, 14 handelt es sich jeweils um sogenannte Axialkolbenmaschinen in Schrägachsbauart, die jeweils ein Schwenkgehäuse 17, 18 umfassen, das sich zur Veränderung eines Förder- und/oder Schluckvolumens um eine Achse, also eine Rotationsachse bzw. Schwenkachse 19 der jeweiligen hydrostatischen Einheit 13, 14, schwenken lässt. Durch die Verwendung derartig ausgestalteter hydrostatische Einheiten 13, 14 lässt sich mit dem hydrostatischen Getriebe 4 auf einfache Weise - nämlich durch Änderung des Förder- und/oder Schluckvolumens - ein Drehzahlverhältnis stufenlos verstellen, das zwischen den hydrostatischen Einheiten 13, 14 und damit zwischen den damit wirk- bzw. antriebsverbundenen Zwischenwellen 9, 10 besteht. Indem die hydrostatischen Einheiten 13, 14 einen im Wesentlichen identischen Aufbau (gemeint ist hiermit eine bauartgleiche Ausgestaltung) haben, lässt sich das hydrostatische Getriebe 4 dabei in umkehrbarer Richtung betreiben, d.h. die Funktionszuordnung der hydrostatischen Einheiten 13, 14 jeweils als Pumpe und Motor ist umkehrbar.

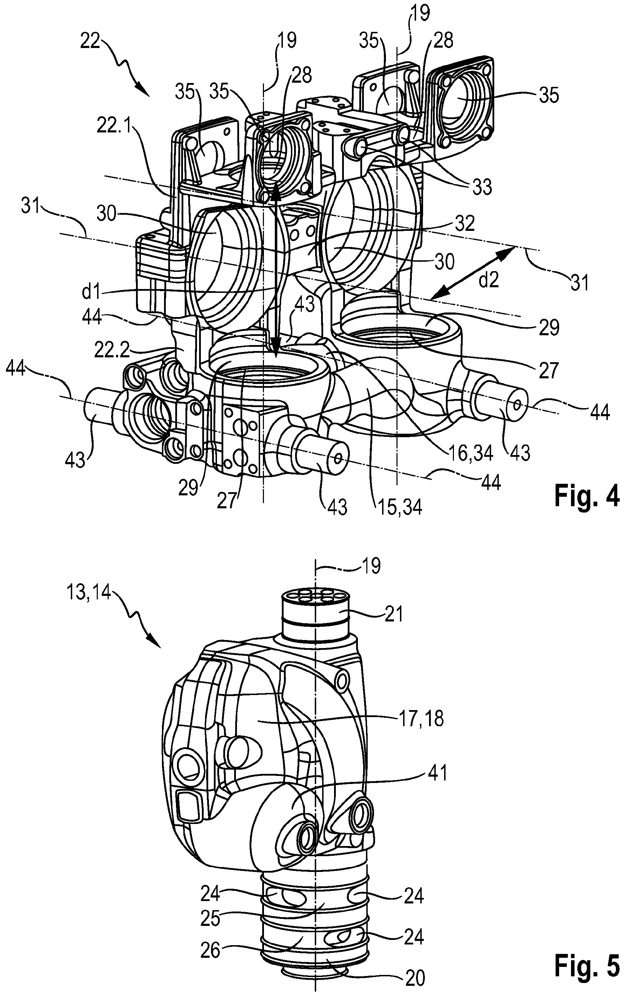

Die in FIG. 5 im Detail dargestellte hydrostatische Einheit 13, 14 umfasst eine in den FIGs. nicht dargestellte Kolbentrommel, die mit in den hydrostatischen Einheiten 13, 14 ausgebildeten Kanälen zur Übertragung der Antriebsleistung hydraulisch verbunden ist und ein mit Zylinderbohrungen versehenes drehbares Kolbengehäuse sowie darin eingesetzte Kolben umfasst, die jeweils über ein Kugelgelenk mit einer radförmigen Triebflanschscheibe verbunden sind. Eine in den FIGs. nicht dargestellte Drehachse des Kolbengehäuses bildet mit einer Achse der Triebflanschscheibe, die jeweils mit einer Achse einer der in den Kupplungseinrichtungen 12.1, 12.2 aufgenommenen Zwischenwellen 9, 10 zusammenfällt, jeweils einen Schwenkwinkel, der sich durch Verschwenken eines das Kolbengehäuse aufnehmenden Schwenkgehäuses 17, 18 verändern lässt, um so das Förder- und/oder Schluckvolumen der hydrostatischen Einheiten 13, 14 zu verändern.

Damit sich das Schwenkgehäuse 17, 18 einer jeden hydrostatischen Einheit 13, 14 zur Veränderung des Schwenkwinkels und demnach zur Veränderung des Förder- und/oder Schluckvolumens einer hydrostatischen Einheit 13, 14 verschwenken lässt, sind an dem Schwenkgehäuse 17, 18 jeweils eine Drehdurchführung 20 mit zylindrischer Grundform sowie ein Drehzapfen 21 ebenfalls mit zylindrischer Grundform ausgebildet, welche die Rotationsachse bzw. Schwenkachse 19 jeder hydrostatischen Einheit 13, 14 definieren. Indem das Schwenkgehäuse 17, 18 mittels des Drehzapfens 21 und der Drehdurchführung 20 gegenüber einer im Folgenden noch im Detail beschriebenen Lagerbrücke 22 des hydrostatischen Getriebes 4 aufgenommen bzw. gelagert ist, lässt sich das Schwenkgehäuse 17, 18 gegenüber der Lagerbrücke 22 um die Rotationsachse bzw. Schwenkachse 19 schwenken.

Bei dem Drehzapfen 21 handelt es sich um ein rein mechanisch wirkendes Element, das mittels einer in FIG. 2 zu sehenden Stelleinrichtung 23, die ebenfalls über die Lagerbrücke 22 aufgenommen bzw. gelagert wird, betätigt wird, um die hydrostatische Einheit 13, 14 bzw. das Schwenkgehäuse 17, 18 der hydrostatischen Einheit 13, 14 zu verschwenken. Hingegen hat die Drehdurchführung 20 neben einer mechanischen Funktion als Drehlagerzapfen weiterhin die Funktion, die hydraulische Versorgung am Übergang zwischen Lagerbrücke 22 und dem (dieser gegenüber beweglichen) Schwenkgehäuse 17, 18 zu gewährleisten. Der Drehzapfen 21 und die Drehdurchführung 20 einer jeden hydrostatischen Einheit 13, 14 sind zueinander beabstandet an gegenüberliegenden Enden eines Schwenkgehäuses 17, 18 einer hydrostatischen Einheit 13, 14 ausgebildet bzw. angeordnet, sodass eine Rotationsachse bzw. Schwenkachse 19 der hydrostatischen Einheit 13, 14 jeweils mittig durch den Drehzapfen 21 und die Drehdurchführung 20 einer hydrostatischen Einheit 13, 14 verläuft.

Jede hydrostatische Einheit 13, 14 umfasst neben den Kanälen zur Übertragung der Antriebsleistung Öffnungen 24, die einerseits mit den Kanälen der hydrostatischen Einheiten 13, 14 (d.h., die Kanäle die mit der Kolbentrommel hydraulisch verbunden sind) und andererseits mit Kanälen der Lagerbrücke, die im Folgenden noch beschrieben werden, hydraulisch verbunden sind. Die Drehdurchführung 20 umfasst zwei voneinander axial beabstandete Umfangsbereiche 25, 26, wobei an jedem dieser Umfangsbereiche 25, 26 die Öffnungen 24 in Form von sich in Umfangsrichtung erstreckenden Langlöchern ausgebildet sind. Vorzugsweise umfasst jeder Umfangsbereich 25, 26 drei voneinander in Umfangsrichtung beabstandete Öffnungen 24, die insbesondere sternförmig auf die Kanäle in den hydrostatischen Einheiten 13, 14 zulaufen. In der Lagerbrücke 22 sind in einem die Drehdurchführung 20 aufnehmenden Bereich zwei entsprechend axial voneinander beabstandete ringförmige Ausnehmungen 27 ausgebildet, von denen nur eine in den FIGs. zu erkennen ist, so dass in Zusammenwirkung zwischen den hydrostatischen Einheiten 13, 14 und der Lagerbücke 22 hydraulische Verbindungen geschaffen werden, die Teil der beiden Hydraulikleitungen 15, 16 zur Übertragung der Antriebsleistung sind.

Wie bereits angegeben, umfasst das hydrostatische Getriebe 4 die Lagerbrücke 22, die insbesondere der FIG. 4 zu entnehmen ist. In der Lagerbrücke 22 des hydrostatischen Getriebes 4 sind unter anderem die hydrostatischen Einheiten 13, 14 aufgenommen bzw. gelagert.

Die Lagerbrücke 22 umfasst zwei erste Lageraufnahmen 28 sowie zwei zweite Lageraufnahmen 29. Die beiden ersten Lageraufnahmen 28 sind beabstandet zueinander angeordnet. Entsprechendes gilt auch für die zweiten Lageraufnahmen 29. Ferner sind die ersten und zweiten Lageraufnahmen 28, 29 voneinander beabstandet gegenüberliegend angeordnet und zwar mit einem Abstand d1. Die beiden ersten und zweiten Lageraufnahmen 28, 29 dienen der drehbeweglichen Aufnahme bzw. Lagerung der hydrostatischen Einheiten 13, 14, wobei jeweils eine erste Lageraufnahme 28 und eine zweite Lageraufnahme 29 gemeinsam eine der beiden hydrostatischen Einheiten 13, 14 drehbeweglich aufnehmen bzw. lagern. Hierbei ist jeweils der Drehzapfen 21 einer hydrostatischen Einheit 13, 14 in einer ersten Lageraufnahme 28 und jeweils die Drehdurchführung 20 derselben hydrostatischen Einheit 13, 14 in einer zweiten Lageraufnahme 29 drehbeweglich aufgenommen bzw. gelagert. Jede hydrostatische Einheit 13, 14 ist demnach mittels ihres Drehzapfens 21 und ihrer Drehdurchführung 20 um ihre Rotationsachse bzw. Schwenkachse 19 drehbeweglich in einer ersten und zweiten Lageraufnahme 28, 29 aufgenommen bzw. gelagert, wobei jede Rotationsachse bzw. Schwenkachse 19 mittig durch die jeweilige erste und zweite Lageraufnahme 28, 29 verläuft.

Zur Aufnahme bzw. Lagerung jeder der hydrostatischen Einheiten 13, 14, insbesondere der mittels der Kupplungseinrichtungen 12.1, 12.2 mit den Zwischenwellen 9, 10 wirkverbundenen Elementen der hydrostatischen Einheiten 13, 14, umfasst die Lagerbrücke 22 zwei dritte Lageraufnahmen 30. Die zwei dritten Lageraufnahmen 30 sind zueinander beabstandet angeordnet. Durch jede der dritten Lageraufnahmen 30 verläuft mittig eine Achse 31, die jeweils mit einer Achse der Zwischenwellen 9, 10 zusammenfällt. Die beiden Achsen 31 der beiden dritten Lageraufnahmen 30 sind parallel zueinander ausgerichtet sind, verlaufen demnach achsparallel zueinander und zwar mit einem Abstand d2 zueinander. Im eingebauten Zustand des hydromechanischen Getriebes 2 sind die dritten Lageraufnahmen 30 in einer Richtung y, die orthogonal zu einer Richtung x der landwirtschaftlichen Arbeitsmaschine 1, die die Haupterstreckungsrichtung der landwirtschaftlichen Arbeitsmaschine 1 definiert, verläuft, zueinander beabstandet angeordnet und die beiden Achsen 31 verlaufen jeweils in Richtung x, also der Haupterstreckungsrichtung, der landwirtschaftlichen Arbeitsmaschine 1 mit dem Abstand d2 zueinander. Die beiden dritten Lageraufnahmen 30 sind strukturell miteinander über einen Steg 32 verbunden, der Teil der Lagerbrücke 22 ist.

Die Rotationsachsen bzw. Schwenkachsen 19 der hydrostatischen Einheiten 13, 14 verlaufen orthogonal zu den Achsen 31 der dritten Lageraufnahmen 30, vorzugsweise schneidet jeweils eine Rotationsachse bzw. Schwenkachse 19 jeweils eine der Achsen 31 orthogonal, so dass ein Abstand der Rotationsachsen bzw. Schwenkachsen 19 zueinander dem Abstand d2 entspricht. Im in die landwirtschaftliche Arbeitsmaschine 1 eingebauten Zustand des hydromechanischen Getriebes 2 sind eine für die Lagerung einer hydrostatischen Einheit 13, 14 vorgesehene erste und zweite Lageraufnahme 28, 29 somit in eine Richtung z, die sowohl orthogonal zur Richtung x als auch orthogonal zur Richtung y der landwirtschaftlichen Arbeitsmaschine 1 verläuft, mit dem Abstand d2 zueinander beabstandet gegenüberliegend angeordnet. Die beiden Rotationsachsen bzw. Schwenkachsen 19 verlaufen im in die landwirtschaftliche Arbeitsmaschine 1 eingebauten Zustand des hydromechanischen Getriebes 2 jeweils ebenfalls in Richtung z und die beiden ersten Lageraufnahmen 28 und die beiden zweiten Lageraufnahmen 29 sind jeweils in Richtung y zueinander beabstandet ausgebildet.

Die ersten, zweiten und/oder dritten Lageraufnahmen 28, 29, 30 sind jeweils zylindrisch ausgebildet, wobei insbesondere die dritten Lageraufnahmen 30 in Richtung ihrer Achsen 31 Abstufungen aufweisen können, die der Aufnahme und Positionierung von Lagern zur Lagerung bzw. Aufnahme der mittels der jeweiligen Kupplungseinrichtung 12.1, 12.2 mit den Zwischenwellen 9, 10 wirkverbundenen Elemente der hydrostatischen Einheiten 13, 14 dienen.

Die Lagerbrücke 22 ist zweigeteilt ausgebildet, ein erstes Lagerbrückenelement 22.1 und ein zweites Lagerbrückenelement 22.2 umfassend. Sowohl das erste Lagerbrückenelement 22.1 als auch das zweite Lagerbrückenelement 22.2 umfassen jeweils Hydraulikkanäle 33, 34. Das erste Lagerbrückenelement 22.1 umfasst die Hydraulikkanäle bzw. -bohrungen 33, die mit der Stelleinrichtung 23 des hydrostatischen Getriebes 4 zur Veränderung des Förder- und/oder Schluckvolumens der hydrostatischen Einheiten 13, 14 hydraulisch verbunden sind. Das zweite Lagerbrückenelement 22.2 umfasst die Hydraulikkanäle 34, die die beiden hydrostatischen Einheiten 13, 14 zur Übertragung der Antriebsleistung hydraulisch miteinander verbinden, demnach Leitungsabschnitte der Hydraulikleitungen 15, 16 ausbilden. Die strukturellen Elemente für die Erfüllung der Funktionen Bereitstellung eines Steuerdrucks zur Betätigung der Stelleinrichtung 23 zur Veränderung des Förder- und/oder Schluckvolumens der hydrostatischen Einheiten 13, 14 und Übertragung der Antriebsleistungen zwischen den hydrostatischen Einheiten 13, 14 sind somit zwischen dem ersten Lagerbrückenelement 22.1 und dem zweiten Lagerbrückenelement 22.2 aufgeteilt. Neben den Kanälen 33 bzw. 34 kann jedes Lagerbrückenelement 22.1, 22.2 noch entsprechende Anschlüsse aufweisen, um ein Hydraulikfluid dem jeweiligen Hydraulikkreislauf (also Hydraulikkreislauf für den Steuerdruck und Hydraulikkreislauf für die Übertragung der Antriebsleistung) zuzuführen.

Die Teilung der Lagerbrücke 22 verläuft durch die dritten Lageraufnahmen 30 und den Steg 32, wobei, vorzugsweise, die Achsen 31 der dritten Lageraufnahmen 30 in der Teilungsebene liegen. Die dritten Lageraufnahmen 30 werden somit in zumindest im Wesentlichen gleichen Anteilen durch das erste und zweite Lagerbrückenelement 22.1, 22.2 ausgebildet. Im in die landwirtschaftliche Arbeitsmaschine 1 eingebauten Zustand des hydromechanischen Getriebes 2 wird die Teilungsebene durch die Richtung x und die Richtung y aufgespannt bzw. definiert. Das erste Lagerbrückenelement 22.1 umfasst ferner die beiden ersten Lageraufnahmen 28, in denen die Drehzapfen 21 der hydrostatischen Einheiten 13, 14 drehbeweglich aufgenommen bzw. gelagert sind, sowie weitere Lageraufnahmen 35, die der Aufnahme von Zylindern 36 der Stelleinrichtung 23 zur Betätigung der Drehzapfen 21 dienen. Das zweite Lagerbrückenelement 22.2 umfasst weiterhin die zweiten Lageraufnahmen 29, in denen die Drehdurchführungen 20 der hydrostatischen Einheiten 13, 14 drehbeweglich aufgenommen bzw. gelagert sind.

Die Kanäle 34 des zweiten Lagerbrückenelements 22.2 werden durch zwei separat voneinander ausgebildete Kanäle 34 definiert, wobei jeweils ein Kanal 34 einen Leitungsabschnitt der Hydraulikleitung 15 und jeweils ein Kanal 34 einen Leitungsabschnitt der Hydraulikleitung 16 ausbildet, wodurch die Kanäle 34 entsprechend der Funktion der hydrostatischen Einheiten 13, 14 als Leitungsabschnitte der Hochdruckseite oder der Niederdruckseite fungieren. Die beiden Kanäle 34 des zweiten Lagerbrückenelements 22.2 sind derart angeordnet, dass sie zwischen den beiden zweiten Lageraufnahmen 29, die beiden zweiten Lageraufnahmen 29 miteinander hydraulisch verbindend, ausgebildet sind. Wie bereits erwähnt, umfasst die Lagerbrücke 22 in einem die Drehdurchführung 20 aufnehmenden Bereich, demnach den zweiten Lageraufnahmen 29, jeweils zwei entsprechend axial voneinander beabstandete ringförmige Ausnehmungen 27, so dass in Zusammenwirkung zwischen den hydrostatischen Einheiten 13, 14 und der Lagerbücke 22 bzw. dem zweiten Lagerbrückenelement 22.2 hydraulische Verbindungen geschaffen werden, die Teil der beiden Hydraulikleitungen 15, 16 sind. Die Kanäle 34 sind demnach mit den ringförmigen Ausnehmungen 27 in den zweiten Lageraufnahmen 29 hydraulisch verbunden, die wiederum mit den Öffnungen 24 der Drehdurchführungen 20 hydraulisch verbunden sind, so dass eine Antriebsleistung im Betrieb des hydromechanischen Getriebes 2 zwischen den hydrostatischen Einheiten 13, 14 übertragen wird.

Erfindungsgemäß ist nun vorgesehen, dass die Geometrie der Kanäle 34 der Lagerbrücke 22 und der Öffnungsquerschnitt der Öffnungen 24 der hydrostatischen Einheiten 13, 14 derart strömungsoptimiert ausgestaltet sind, dass im Betrieb des hydromechanischen Getriebes 2 in allen Betriebspunkten das Hydraulikfluid zur Übertragung der Antriebsleistung in einem Übergangsbereich 37 von den Kanälen 34 der Lagerbrücke 22 zu den Öffnungen 24 der hydrostatischen Einheiten 13, 14 laminar strömt, dort demnach im Wesentlichen keine, wenn überhaupt nur minimale, Druckverluste auftreten. Der Übergangsbereich 37 wird durch die ringförmigen Ausnehmungen 27, die die Kanäle 34 der Lagerbrücke 22 mit den Öffnungen 24 der hydraulischen Einheiten 13, 14 hydraulisch verbinden, die Übergänge der Kanäle 34 zu den ringförmigen Ausnehmungen 27 und die Übergänge von den ringförmigen Ausnehmungen 27 zu den Öffnungen einschließend, gebildet.

Die strömungsoptimierte Ausgestaltung der Geometrie der Kanäle 34 und der Öffnungsquerschnitte der Öffnungen 24 erfolgt dabei vorzugsweise mittels einer sogenannten Computational Fluid Dynamics-, CFD-, Simulation. Hierdurch wird die Geometrie der Kanäle 34 und der Öffnungsquerschnitt der Öffnungen 34 unter Beachtung von Bauraumrestriktionen, Betriebsparametern des hydromechanischen Getriebes 2 und Strömungsparametern des Hydraulikfluids in den Hydraulikleitungen 15, 16 derart optimiert, dass das Hydraulikfluid im Betrieb des hydromechanischen Getriebes 2 in den Hydraulikleitungen 15, 16, insbesondere im Übergangsbereich 37, laminar strömt, so dass im Wesentlichen keine Druckverluste auftreten.

Der Öffnungsquerschnitt jeder Öffnung 24 einer hydrostatischen Einheit 13, 14 ist rundstirnig ausgestaltet, wie in FIG. 5 dargestellt. Die den Öffnungsquerschnitt definierende Kontur weist demnach zwei parallel zueinander verlaufende Seiten und zwei halbkreisförmige Seiten auf, die die zwei parallel zueinander verlaufenden Seiten miteinander verbinden, so dass eine geschlossene Kontur ausgebildet wird.

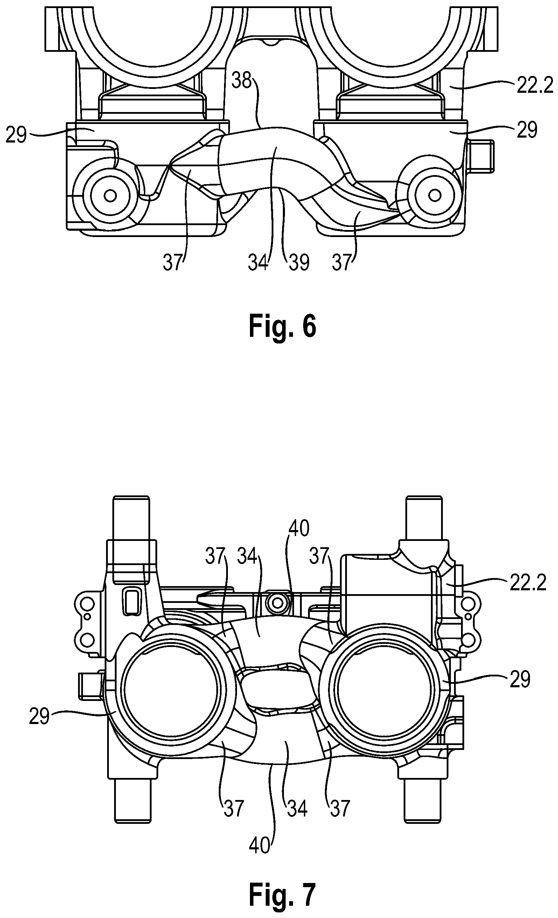

Die Kanäle 34 wiesen jeweils einen geschwungenen Verlauf auf, wobei der Querschnitt der Kanäle 34 entlang ihres geschwungenen Verlaufs kreisrund ausgestaltet ist, wie dies in den FIGs. 6 und 7 dargestellt ist. Der geschwungene Verlauf der Kanäle 34 ist durch Krümmungen in verschiedenen Ebenen charakterisiert. In einer Ebene, die im eingebauten Zustand des hydromechanischen Getriebes 2 durch die Richtung x und die Richtung z aufgespannt wird, umfassen die Kanäle 34 zwei Krümmungen 38, 39, wobei die erste Krümmung 38 entgegengesetzt zu der zweiten Krümmung 39 verläuft, so dass der Verlauf der Kanäle 34 in dieser Ebene im Wesentlichen wellenförmig ist. Vorzugsweise weisen die erste Krümmung 38 und die zweite Krümmung 39 unterschiedliche Krümmungswinkel auf. In einer weiteren orthogonal zu der einen Ebene verlaufenden weiteren Ebene, die im eingebauten Zustand des hydromechanischen Getriebes 2 durch die Richtung x und die Richtung y aufgespannt wird, umfassen die Kanäle 34 eine weitere Krümmung 40, so dass der Verlauf der Kanäle 34 in dieser Ebene im Wesentlichen bogenförmig ist. Die beiden Kanäle 34 sind so angeordnet bzw. ausgebildet, dass ihr Verlauf gegensätzlich ist, wodurch ein Kanal 34 jeweils eine erste ringförmige Ausnehmung 27 der einen zweiten Lageraufnahme 29 mit einer zweiten ringförmigen Ausnehmung 27 der anderen zweiten Lageraufnahme 29 hydraulisch verbindet. Die ersten und zweiten ringförmigen Ausnehmungen 27 sind dabei in der zweiten Lageraufnahme 29 axial in Richtung der Rotationsachse bzw. Schwenkachse 19 voneinander beabstandet ausgebildet bzw. angeordnet. Ein Übergang zwischen den Kanälen 34 der Lagerbrücke 22 und den ringförmigen Ausnehmungen 27 ist in Form einer Düse bzw. eines Diffusors ausgebildet.

Die Kombination aus der Gestaltung der Geometrie der Kanäle 34 der Lagerbrücke 22 (einschließlich der Übergänge zu den ringförmigen Ausnehmungen 27) sowie des Öffnungsquerschnitts der Öffnungen 24 stellt eine laminare Strömung im Übergangsbereich 37 sicher, so dass insbesondere in diesem Bereich, aber auch insgesamt in den Hydraulikleitungen 15, 16 im Wesentlichen keine Druckverluste auftreten.

Jede hydrostatische Einheit 13, 14 umfasst weiterhin ein hydraulisch wirksames Dämpfungselement 41, das der Vermeidung von Betriebsgeräuschen, die sich im Betrieb des hydrostatischen Getriebes 4 zumindest in bestimmten Betriebssituation ergeben können, dient. Die hydraulisch wirksamen Dämpfungselemente 41 sind jeweils am Schwenkgehäuse 17, 18 einer hydrostatischen Einheit 13, 14 ausgebildet und zwar seitlich außen am Schwenkgehäuse 17, 18, vorzugsweise seitlich außen am Schwenkgehäuse 17, 18 unmittelbar angrenzend an die Drehdurchführung 20 der hydrostatischen Einheit 13, 14. Das hydraulisch wirksame Dämpfungselement 41 ist demnach räumlich zwischen dem Drehzapfen 21 und der Drehdurchführung 20 als Bestandteil des Schwenkgehäuses 17, 18 einer hydrostatischen Einheit 13, 14 ausgebildet. Das hydraulisch wirksame Dämpfungselement 41 ist mit in dem Schwenkgehäuse 17, 18 ausgebildeten, in den FIGs. nicht dargestellten Kanälen, die die Drehdurchführung 20 mit der Kolbentrommel hydraulisch verbinden und einen weiteren Leitungsabschnitt der Hydraulikleitungen 15, 16 ausbilden, hydraulisch über eine ebenfalls in den FIGs. nicht dargestellte Stichleitung verbunden.

Vorzugsweise ist das hydraulisch wirksame Dämpfungselement 41 als sogenannter Helmholtz-Resonator ausgebildet ist, wobei auf eine Beschreibung der Funktionsweise im Folgenden verzichtet wird, da die Funktionsweise eines solchen hydraulisch wirksamen Dämpfungselements im Kontext von hydrostatischen Getrieben hinlänglich bekannt ist.

Alternativ können als hydraulisch wirksames Dämpfungselement 41 auch andere hydraulisch wirksame Dämpfungselemente zum Einsatz kommen, wie beispielsweise ein Lambda/4-Schlauch, ein hydraulischer Federspeicher oder ein aktiver Dämpfer.

Das hydrostatische Getriebe 4 umfasst weiterhin Dämpfungselemente 42, die das hydrostatische Getriebe 4 mit dem Getriebegehäuse des hydromechanischen Getriebes 2 nachgiebig verbinden. Die Dämpfungselemente 42 dienen dazu, das hydrostatische Getriebe 4 von dem Getriebegehäuse schwingungstechnisch zu entkoppeln. Die Dämpfungselemente 42 sind jeweils als von einer in den FIGs. nicht dargestellten elastischen Hülse umgebender Zapfen 37 ausgebildet. Der Zapfen 43 eines Dämpfungselements 42 ist dabei vorzugsweise integral mit der Lagerbrücke 22 ausgebildet und weist eine zylindrische Formgebung auf. Der Zapfen 43 kann jedoch auch mittels einer Passung mit der Lagerbücke 22 verbunden sein.

Die elastische Hülse ist vorzugsweise als sogenannte Ultrabuchse ausgebildet, die in an sich bekannter Weise jeweils eine Elastomerschicht zwischen starren äußeren und inneren Hülsen aufweist. Die Ultrabuchse ist am Zapfen 43 fixiert durch Klemmung. Der die Ultrabuchse umfassende Zapfen 43 wird am Getriebegehäuse über eine kraft- und/oder formschlüssige Passung, vorzugsweise unter Verwendung eines Deckels, fixiert, wobei eine Elastomerscheibe zwischen Zapfen 43 und Getriebegehäuse angeordnet sein kann, die geringfügig stauchbar in axialer Richtung des Zapfens 43 ist. Diese Elastomerscheibe zusammen mit der Ultrabuchse begünstigt eine gedämpfte Schwingbewegungen des Zapfens 43 relativ zum Getriebegehäuse in alle drei Raumrichtungen, also die Richtung x, Richtung y und Richtung z im in die landwirtschaftliche Arbeitsmaschine 1 eingebauten Zustand des hydromechanischen Getriebes 2.

Wie insbesondere in den FIGs. 4A und 4B zu sehen, sind die Dämpfungselemente 42 am zweiten Lagerbrückenelement 22.2, vorzugsweise integral mit dem zweiten Lagerbrückenelement 22.2, ausgebildet. Mittig durch die Zapfen 43 verlaufenden Achsen 44 sind dabei parallel zu den Achsen 31 der dritten Lageraufnahmen 30 ausgerichtet. Demnach verlaufen die Achsen 44 der Zapfen 43 achsparallel zu den Achsen 31 der dritten Lageraufnahmen 30. Im in die landwirtschaftliche Arbeitsmaschine 1 eingebauten Zustand des hydromechanischen Getriebes 2 sind die Achsen 44 demnach in Richtung x, also in Haupterstreckungsrichtung, der landwirtschaftlichen Arbeitsmaschine 1, ausgerichtet.

Vorzugsweise sind an der Lagerbrücke 22, insbesondere am zweiten Lagerbrückenelement 22.2, vier solcher Dämpfungselemente 42 angeordnet. Die Dämpfungselemente 42 sind jeweils in den Eckbereichen des zweiten Lagerbrückenelements 22.2, auf Höhe (Richtung z im in der landwirtschaftlichen Arbeitsmaschine 1 eingebauten Zustand des hydromechanischen Getriebes 2) der zweiten Lageraufnahmen 29 ausgebildet. Zu jedem Dämpfungselement 42 ist in zwei Raumrichtungen beabstandet ein weiteres der vier Dämpfungselemente 42 angeordnet. Alle vier Dämpfungselemente 42 sind in einer durch die beiden Raumrichtungen aufgespannten Ebene angeordnet, wobei die Ebene durch die zweiten Lageraufnahmen 29 verläuft. Im in die landwirtschaftliche Arbeitsmaschine 1 eingebauten Zustand des hydromechanischen Getriebes 2 wird die Ebene durch die Richtung x und die Richtung y aufgespannt, die Ebene verläuft demnach parallel zu der Teilungsebene der Lagerbrücke 22 durch die zweiten Lageraufnahmen 29. Die Dämpfungselemente 42 sind im in die landwirtschaftliche Arbeitsmaschine 1 eingebauten Zustand des hydromechanischen Getriebes 2 zueinander benachbart in Richtung x und Richtung y angeordnet, wobei die Zapfen 43 jeweils zweier in Richtung y benachbarter Dämpfungselemente 42 jeweils von dem zweiten Lagerbrückenelement 22.2 ausgehend in negative oder positive Richtung x, also Haupterstreckungsrichtung, der landwirtschaftlichen Arbeitsmaschine 1 weisen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

**Bezugszeichenliste**

| | | | |
|---|---|---|---|
| 1 | landwirtschaftliche Arbeitsmaschine | 23 | Stelleinrichtung |
| | | 24 | Öffnungen |
| 2 | hydromechanisches Getriebe | 25 | Umfangsbereich |
| 3 | mechanisches Getriebe | 26 | Umfangsbereich |
| 4 | hydrostatisches Getriebe | 27 | ringförmige Ausnehmung |
| 5 | Getriebeeingangswelle | 28 | erste Lageraufnahme |
| 6 | Getriebeausgangswelle | 29 | zweite Lageraufnahme |
| 7 | Zapfwelle | 30 | dritte Lageraufnahmen |
| 8 | Achse | 31 | Achse |
| 9 | Zwischenwelle | 32 | Steg |
| 10 | Zwischenwelle | 33 | Hydraulikkanäle bzw. -bohrungen des ersten Lagerbrückenelements |
| 11 | Zwischenwelle | | |
| 12.1 | Kupplungseinrichtung | 34 | Hydraulikkanäle des zweiten Lagerbrückenelements |
| 12.2 | Kupplungseinrichtung | | |
| 13 | hydrostatische Einheit | 35 | Lageraufnahmen |
| 14 | hydrostatische Einheit | 36 | Zylinder der Stelleinrichtung |
| 15 | Hydraulikleitung | 37 | Übergangsbereich |
| 16 | Hydraulikleitung | 38 | Krümmung |
| 17 | Schwenkgehäuse | 39 | Krümmung |
| 18 | Schwenkgehäuse | 40 | Krümmung |
| 19 | Rotationsachse bzw. Schwenkachse | 41 | hydraulisch wirksamen Dämpfungselement |
| 20 | Drehdurchführung | 42 | Dämpfungselement |
| 21 | Drehzapfen | 43 | Zapfen |
| 22 | Lagerbrücke | 44 | Achse |
| 22.1 | erstes Lagerbrückenelement | | |
| 22.2 | zweites Lagerbrückenelement | | |

## Patentansprüche

1. Hydromechanisches Getriebe (2) mit einem mechanischen Getriebe (3) und einem stufenlos verstellbaren hydrostatischen Getriebe (4), das mit dem mechanischen Getriebe (3) zusammenwirkt, wobei das mechanische Getriebe (3) und das hydrostatische Getriebe (4) in einem Getriebegehäuse aufgenommen sind, wobei das hydrostatische Getriebe (4) eine als Pumpe wirkende hydrostatische Einheit (13; 14) und eine als Motor wirkende hydrostatische Einheit (14; 13) umfasst, die miteinander zur Übertragung einer Antriebsleistung hydraulisch verbunden sind, wobei das hydrostatische Getriebe (3) eine Lagerbrücke (22) umfasst, in der die hydrostatischen Einheiten (13, 14) drehbeweglich gelagert sind, wobei die Lagerbrücke (22) Kanäle (34) und die hydrostatischen Einheiten (13, 14) jeweils Kanäle und Öffnungen (24) zur Übertragung der Antriebsleistung umfassen, wobei die Öffnungen (24) der hydrostatischen Einheit (13, 14) und die Kanäle der hydrostatischen Einheit hydraulisch miteinander verbunden sind, wobei die Kanäle (34) der Lagerbrücke (22) und die Öffnungen (24) der hydrostatischen Einheiten (13, 14) hydraulisch miteinander verbunden sind,
**dadurch gekennzeichnet, dass**
die Geometrie der Kanäle (34) der Lagerbrücke (22) und der Öffnungsquerschnitt der Öffnungen (24) der hydrostatischen Einheiten (13, 14), vorzugsweise mittels einer Computational Fluid Dynamics-, CFD-, Simulation, derart strömungsoptimiert ausgestaltet sind, dass in allen Betriebspunkten des hydromechanischen Getriebes (2) ein hydraulisches Fluid zur Übertragung der Antriebsleistung im Übergangsbereich (37) von den Kanälen (34) der Lagerbrücke (22) zu den Öffnungen (24) der hydrostatischen Einheiten (13, 14) laminar strömt, wobei die Öffnungen (24) der hydrostatischen Einheiten (13, 14) einen rundstirnigen Öffnungsquerschnitt mit zwei parallel zueinander verlaufenden Seiten und zwei halbkreisförmigen, die zwei parallel zueinander verlaufenden Seiten miteinander verbindende, Seiten aufweist, wobei die Kanäle (34) der Lagerbrücke (22) jeweils einen geschwungenen Verlauf und einen entlang ihres Verlaufes kreisrunden Querschnitt aufweisen, wobei die Kanäle (34) der Lagerbrücke (22) jeweils in einer ersten Ebene zwei Krümmungen (38, 39) und in einer zweiten orthogonal zu der ersten Ebene verlaufenden zweiten Ebene eine Krümmung (40) aufweisen.

2. Hydromechanisches Getriebe (2) nach Anspruch 1, **dadurch gekennzeichnet, dass** die Lagerbrücke (22) ringförmige Ausnehmungen (27) aufweist, die die Kanäle (34) der Lagerbrücke (22) mit den Öffnungen (24) der hydrostatischen Einheiten (13, 14) hydraulisch verbinden, wobei ein Übergang zwischen den Kanälen (34) der Lagerbrücke (22) und den ringförmigen Ausnehmungen (27) in Form einer Düse bzw. eines Diffusors ausgebildet ist.

3. Hydromechanisches Getriebe (2) nach Anspruch 1 oder 2, **dadurch gekennzeichnet, dass** jede hydrostatische Einheit (13, 14) ein Schwenkgehäuse (17, 18) umfasst, in dem eine Kolbentrommel drehbeweglich aufgenommen ist, wobei jede hydrostatische Einheit (13, 14) eine Drehdurchführung (20) und einen Drehzapfen (21) umfasst, wobei die Drehdurchführung (20) und der Drehzapfen (21) einer hydrostatischen Einheit (13, 14) an gegenüberliegenden Enden des Schwenkgehäuses (17, 18) der hydrostatischen Einheit (13, 14) ausgebildet sind, wobei die Öffnungen (24) der hydrostatischen Einheiten (13, 14) an der Drehdurchführung (20) ausgebildet sind.

4. Hydromechanisches Getriebe (2) nach Anspruch 3, **dadurch gekennzeichnet, dass** die Lagerbrücke (22) zwei voneinander beabstandete erste Lageraufnahmen (28) und zwei voneinander beabstandete zweite Lageraufnahmen (29) umfasst, wobei jeweils eine hydrostatische Einheit (13, 14) drehbeweglich um eine Rotationsachse (19) in jeweils einer ersten Lageraufnahme (28) und einer zweiten Lageraufnahme (29) gelagert ist, wobei die Drehdurchführungen (20) der hydrostatischen Einheiten (13, 14) in den zweiten Lageraufnahmen (29) und die Drehzapfen (21) der hydrostatischen Einheiten (13, 14) in den ersten Lageraufnahmen (28) drehbeweglich gelagert sind, wobei die Kanäle (34) der Lagerbrücke (22) zur Übertragung der Antriebsleistung zwischen den zweiten Lageraufnahmen (29) ausgebildet sind, wobei die ringförmigen Ausnehmungen (27) in den zweiten Lageraufnahmen (29) ausgebildet sind.

5. Hydromechanisches Getriebe (2) nach einem der Ansprüche 1 bis 4, **dadurch gekennzeichnet, dass** jede hydrostatische Einheit (13, 14) ein hydraulisch wirksames Dämpfungselement (41) umfasst, wobei, vorzugsweise, das hydraulisch wirksame Dämpfungselement (41) als Helmholtz-Resonator, Lambda/4-Schlauch, hydraulischer Federspeicher, aktiver Dämpfer oder dergleichen ausgebildet ist.

6. Hydromechanisches Getriebe (2) nach Anspruch 5, **dadurch gekennzeichnet, dass** das hydraulisch wirksame Dämpfungselement (41) außen am Schwenkgehäuse (17, 18) der hydrostatischen Einheit (13, 14) angeordnet und mit den Kanälen der hydrostatischen Einheit (13, 14) hydraulisch verbunden ist, wobei, vorzugsweise, das hydraulisch wirksame Dämpfungselement (41) unmittelbar angrenzend an die Drehdurchführung (20) außen am Schwenkgehäuse (17, 18) angeordnet ist.

7. Hydromechanisches Getriebe (2) nach Anspruch 4 oder Anspruch 4 und 5 oder 6, **dadurch gekennzeichnet, dass** die Lagerbrücke (22) zweigeteilt, ein erstes Lagerbrückenelement (22.1) und ein zweites Lagerbrückenelement (22.2) umfassend, ausgebildet ist, wobei das erste Lagerbrückenelement (22.1) Kanäle (33), die mit einer Stelleinrichtung (23) des hydrostatischen Getriebes (4) zur Veränderung des Förder- und/oder Schluckvolumens der hydrostatischen Einheiten (13, 14) hydraulisch verbunden sind, und die ersten Lageraufnahmen (28) umfasst, wobei das zweite Lagerbrückenelement (22.2) die Kanäle (34) der Lagerbrücke (22) zur Übertragung der Antriebsleistung und die zweiten Lageraufnahmen (29) umfasst.

8. Hydromechanisches Getriebe (2) nach Anspruch 7, **dadurch gekennzeichnet, dass** die Lagerbrücke (22) zwei voneinander beabstandete dritte Lageraufnahmen (30) umfasst, wobei mittig durch die dritten Lageraufnahmen (30) verlaufende Achsen (31) parallel zueinander ausgerichtet sind, wobei in jeder dritten Lageraufnahme (30) Elemente der hydrostatischen Einheit (13, 14) aufgenommen sind, die mittels einer Kupplungseinrichtung (12.1, 12.2) mit dem mechanischen Getriebe (3) wirkverbunden sind, wobei die dritten Lageraufnahmen (30) mittels eines Steges (32) voneinander beabstandet sind, wobei die Teilung der Lagerbrücke (22) durch den Steg (32) und die dritten Lageraufnahmen (30) der Lagerbrücke (22) verläuft, wobei, vorzugsweise, die Achsen (31) der dritten Lageraufnahmen (30) in der Teilungsebene liegen.

9. Hydromechanisches Getriebe (2) nach einem der Ansprüche 1 bis 8, **dadurch gekennzeichnet, dass** das hydrostatische Getriebe (4) Dämpfungselemente (42) umfasst, die das hydrostatische Getriebe (4) mit dem Getriebegehäuse nachgiebig verbinden, wobei die Dämpfungselemente (42) jeweils einen von einer elastischen Hülse umgebenen Zapfen (43) umfassen, wobei, vorzugsweise, der Zapfen (43) jedes Dämpfungselements (42) integral mit der Lagerbrücke (22) ausgebildet ist.

10. Hydromechanisches Getriebe (2) nach Anspruch 9, **dadurch gekennzeichnet, dass** die Dämpfungselemente (42) am zweiten Lagerbrückenelement (22.2) ausgebildet sind, wobei die Dämpfungselemente (42) achsparallel zu den Achsen (31) der dritten Lageraufnahmen (30) ausgerichtet sind.

11. Hydromechanisches Getriebe (2) nach Anspruch 9 oder 10, **dadurch gekennzeichnet, dass** das hydrostatische Getriebe (4) vier Dämpfungselemente (42) aufweist, wobei zu jedem der vier Dämpfungselemente (42) in zwei Raumrichtung beabstandet ein weiteres der vier Dämpfungselement (42) angeordnet ist, wobei alle vier Dämpfungselemente (42) in einer durch die zwei Raumrichtungen aufgespannten Ebene angeordnet sind, wobei, vorzugsweise, die Ebene durch die zweiten Lageraufnahmen (29), insbesondere parallel zur Teilungsebene der Lagerbrücke (22), verläuft.

12. Landwirtschaftliche Arbeitsmaschine (1), insbesondere Traktor, mit einem hydromechanischen Getriebe (2), **dadurch gekennzeichnet, dass** das hydromechanische Getriebe (2) nach einem der Ansprüche 1 bis 11 ausgebildet ist.

## Claims

1. A hydromechanical transmission (2) with a mechanical transmission (3) and a continuously variable hydrostatic transmission (4) which cooperates with the mechanical transmission (3), wherein the mechanical transmission (3) and the hydrostatic transmission (4) are accommodated in a transmission housing, wherein the hydrostatic transmission (4) comprises a hydrostatic unit (13; 14) operating as a pump and a hydrostatic unit (14; 13) operating as a motor, which are hydraulically connected in order to transmit motive power, wherein the hydrostatic transmission (3) comprises a bearing bridge (22) in which the hydrostatic units (13, 14) are rotatably mounted, wherein the bearing bridge (22) comprises channels (34) and the hydrostatic units (13, 14) respectively comprise channels and openings (24) for transmitting the motive power, wherein the openings (24) of the hydrostatic unit (13, 14) and the channels of the hydrostatic unit are hydraulically connected, wherein the channels (34) of the bearing bridge (22) and the openings (24) of the hydrostatic units (13, 14) are connected together hydraulically,
**characterized in that**
the geometry of the channels (34) of the bearing bridge (22) and the opening cross section of the openings (24) of the hydrostatic units (13, 14) are designed in a flow-optimised manner, preferably by means of a Computational Fluid Dynamics - CFD - simulation, in a manner such that in all operating points of the hydromechanical transmission (2), a hydraulic fluid for transmitting the motive power flows in a laminar manner in the transitional region (37) from the channels (34) of the bearing bridge (22) to the openings (24) of the hydrostatic units (13, 14), wherein the opening cross section of the openings (24) of the hydrostatic units (13, 14) is round-ended with two mutually parallel sides and two semicircular sides which connect the two mutually parallel sides together, wherein the channels (34) of the bearing bridge (22) respectively have a curved profile and a circular cross section extending along their profile, wherein the channels (34) of the bearing bridge (22) respectively have two curves (38, 39) in a first plane and one curve (40) in a second plane which is orthogonal to the first plane.

2. The hydromechanical transmission (2) according to claim 1, **characterized in that** the bearing bridge (22) has annular recesses (27) which hydraulically connect the channels (34) of the bearing bridge (22) to the openings (24) of the hydrostatic units (13, 14), wherein a transition between the channels (34) of the bearing bridge (22) and the annular recesses (27) is configured in the form of a nozzle or a diffuser.

3. The hydromechanical transmission (2) according to claim 1 or claim 2, **characterized in that** each hydrostatic unit (13, 14) comprises a pivot housing (17, 18) in which a cylinder block is rotatably received, wherein each hydrostatic unit (13, 14) comprises a rotary union (20) and a pivot pin (21), wherein the rotary union (20) and the pivot pin (21) of a hydrostatic unit (13, 14) are formed on opposite ends of the pivot housing (17, 18) of the hydrostatic unit (13, 14), wherein the openings (24) of the hydrostatic units (13, 14) are formed at the rotary union (20).

4. The hydromechanical transmission (2) according to claim 3, **characterized in that** the bearing bridge (22) comprises two first bearing seats (28) which are separated from one another and two second bearing seats (29) which are separated from one another, wherein a respective hydrostatic unit (13, 14) is rotatably mounted about an axis of rotation (19) in a respective first bearing seat (28) and a second bearing seat (29), wherein the rotary unions (20) of the hydrostatic units (13, 14) are rotatably mounted in the second bearing seats (29) and the pivot pins (21) of the hydrostatic units (13, 14) are rotatably mounted in the first bearing seats (28), wherein the channels (34) of the bearing bridges (22) are constructed for transmitting the motive power between the second bearing seats (29), wherein the annular recesses (27) are formed in the second bearing seats (29).

5. The hydromechanical transmission (2) according to one of claims 1 to 4, **characterized in that** each hydrostatic unit (13, 14) comprises a hydraulically operative damping element (41), wherein preferably, the hydraulically operative damping element (41) is configured as a Helmholtz resonator, lambda/4 tube, hydraulic spring loaded mechanism, active damper or the like.

6. The hydromechanical transmission (2) according to claim 5, **characterized in that** the hydraulically operative damping element (41) is disposed on the outside of the pivot housing (17, 18) of the hydrostatic unit (13, 14) and is hydraulically connected to the channels of the hydrostatic unit (13, 14), wherein preferably, the hydraulically operative damping element (41) is disposed immediately adjacent to the rotary union (20) on the outside of the pivot housing (17, 18).

7. The hydromechanical transmission (2) according to claim 4, or claim 4 and 5 or 6, **characterized in that** the bearing bridge (22) is divided into two, comprising a first bearing bridge element (22.1) and a second bearing bridge element (22.2), wherein the first bearing bridge element (22.1) comprises channels (33) which are hydraulically connected to a positioning device (23) of the hydrostatic transmission (4) in order to change the delivery and/or displacement volume of the hydrostatic units (13, 14) and comprises the first bearing seats (28), wherein the second bearing bridge element (22.2) comprises the channels (34) of the bearing bridge (22) for transmitting the motive power and comprises the second bearing seats (29).

8. The hydromechanical transmission (2) according to claim 7, **characterized in that** the bearing bridge (22) comprises two third bearing seats (30) which are separated from one another, wherein axes (31) which pass through the centre of the third bearing seats (30) are orientated parallel with respect to each other, wherein elements of the hydrostatic unit (13, 14) which are operatively connected to the mechanical transmission (3) by means of a clutch device (12.1, 12.2) are received in each third bearing seat (30), wherein the third bearing seats (30) are separated from each other by means of a web (32), wherein the division of the bearing bridge (22) passes through the web (32) and the third bearing seat (30) of the bearing bridge (22), wherein preferably, the axes (31) of the third bearing seats (30) lie in the plane of the division.

9. The hydromechanical transmission (2) according to one of claims 1 to 8, **characterized in that** the hydrostatic transmission (4) comprises damping elements (42) which flexibly connect the hydrostatic transmission (4) to the transmission housing, wherein the damping elements (42) respectively comprise a pin (43) surrounded by an elastic sleeve, wherein preferably, the pin (43) of each damping element (42) is integrally formed with the bearing bridge (22).

10. The hydromechanical transmission (2) according to claim 9, **characterized in that** the damping element (42) is formed on the second bearing bridge element (22.2), wherein the damping elements (42) are aligned axially parallel to the axes (31) of the third bearing seats (30).

11. The hydromechanical transmission (2) according to claim 9 or claim 10, **characterized in that** the hydrostatic transmission (4) has four damping elements (42), wherein each of the four damping elements (42) has a further of the four damping elements (42) spaced therefrom in two directions in space, wherein all four damping elements (42) are disposed in a plane spanning the two directions in space, wherein preferably, the plane passes through the second bearing seats (29), in particular parallel to the plane of the division of the bearing bridge (22).

12. An agricultural working machine (1), in particular a tractor, with a hydromechanical transmission (2), **characterized in that** the hydromechanical transmission (2) is configured in accordance with one of claims 1 to 11.

## Revendications

1. Transmission hydromécanique (2) comprenant une transmission mécanique (3) et une transmission hydrostatique (4) à réglage continu qui coopère avec la transmission mécanique (3), la transmission mécanique (3) et la transmission hydrostatique (4) étant placées dans un carter de transmission, la transmission hydrostatique (4) comportant une unité hydrostatique (13 ; 14), agissant comme pompe, et une unité hydrostatique (14 ; 13) agissant comme moteur, qui sont reliées entre elles sur le plan hydraulique aux fins de transmission d'une puissance d'entraînement, la transmission hydrostatique (4) comportant un pont de paliers (22) dans lequel les unités hydrostatiques (13, 14) sont montées avec possibilité de rotation, le pont de paliers (22) comportant des conduits (34), et les unités hydrostatiques (13, 14) comportant respectivement des conduits et des orifices (24) destinés à la transmission de la puissance d'entraînement, les orifices (24) de l'unité hydrostatique (13, 14) et les conduits de l'unité hydrostatique étant reliés entre eux sur le plan hydraulique, les conduits (34) du pont de paliers (22) et les orifices (24) des unités hydrostatiques (13, 14) étant reliés entre eux sur le plan hydraulique,
**caractérisée en ce que**
la géométrie des conduits (34) du pont de paliers (22) et la section transversale d'ouverture des orifices (24) des unités hydrostatiques (13, 14) sont agencées avec un écoulement optimisé, de préférence à l'aide d'une simulation CFD (mécanique des fluides numériques), de manière à ce que dans tous les points de fonctionnement dynamique de la transmission hydromécanique (2), un fluide hydraulique s'écoule de façon laminaire dans la zone de transition (37) des conduits (34) du pont de paliers (22) vers les orifices (24) des unités hydrostatiques (13, 14), en vue de la transmission de la puissance d'entraînement, les orifices (24) des unités hydrostatiques (13, 14) présentant une section transversale d'ouverture à face frontale ronde avec deux faces parallèles l'une à l'autre et deux faces en forme de demi-cercles, reliant entre elles les deux faces mutuellement parallèles, les conduits (34) du pont de paliers (22) présentant respectivement un tracé courbe et, le long de leur tracé, une section transversale circulaire, les conduits (34) du pont de paliers (22) présentant respectivement deux courbures (38, 39) dans un premier plan et une courbure (40) dans un deuxième plan qui s'étend de façon orthogonale par rapport au premier plan.

2. Transmission hydromécanique (2) selon la revendication 1, **caractérisée en ce que** le pont de paliers (22) présente des évidements (27) annulaires qui relient les conduits (34) du pont de paliers (22) aux orifices des unités hydrostatiques (13, 14), une transition entre les conduits (34) du pont de paliers (22) et les évidements (27) annulaires étant réalisée sous la forme d'une buse ou d'un diffuseur.

3. Transmission hydromécanique (2) selon la revendication 1 ou 2, **caractérisée en ce que** chaque unité hydrostatique (13, 14) comprend un carter pivotant (17, 18) dans lequel un tambour à piston est installé avec possibilité de rotation, chaque unité hydrostatique (13, 14) comportant un passage tournant (20) et un pivot (21), le passage tournant (20) et le pivot (21) d'une unité hydrostatique (13, 14) étant réalisés sur des extrémités opposées du carter pivotant (17, 18) de l'unité hydrostatique (13, 14), les orifices (24) des unités hydrostatiques (13, 14) étant réalisés sur le passage tournant (20).

4. Transmission hydromécanique (2) selon la revendication 3, **caractérisée en ce que** le pont de paliers (22) comprend deux premiers logements de paliers (28), espacés l'un de l'autre, et deux deuxièmes logements de paliers (29) espacés l'un de l'autre, une unité hydrostatique (13, 14) étant montée respectivement avec possibilité de rotation autour d'un axe de rotation (19), respectivement dans un premier logement de palier (28) et un deuxième logement de palier (29), les passages tournants (20) des unités hydrostatiques (13, 14) étant montés avec possibilité de rotation dans les deuxièmes logements de paliers (29), et les pivots (21) des unités hydrostatiques (13, 14) étant montés avec possibilité de rotation dans les premiers logements de paliers (28), les conduits (34) du pont de paliers (22) étant réalisés en vue de la transmission de la puissance d'entraînement entre les deuxièmes logements de paliers (29), les évidements (27) annulaires étant pratiqués dans les deuxièmes logements de paliers (29).

5. Transmission hydromécanique (2) selon une des revendications 1 à 4, **caractérisée en ce que** chaque unité hydrostatique (13, 14) comprend un élément amortisseur (41) à action hydraulique, l'élément amortisseur (41) à action hydraulique étant de préférence réalisé comme résonateur de Helmholtz, tuyau lambda quart d'onde, ressort accumulateur hydraulique, amortisseur actif ou des éléments analogues.

6. Transmission hydromécanique (2) selon la revendication 5, **caractérisée en ce que** l'élément amortisseur (41) à action hydraulique est disposé à l'extérieur sur le carter pivotant (17, 18) de l'unité hydrostatique (13, 14) et est relié sur le plan hydraulique aux conduits de l'unité hydrostatique (13, 14), l'élément amortisseur (41) à action hydraulique étant de préférence disposé à l'extérieur sur le carter pivotant (17, 18), en étant directement adjacent au passage tournant (20).

7. Transmission hydromécanique (2) selon la revendication 4 ou les revendications 4 et 5 ou 6, **caractérisée en ce que** le pont de paliers (22) est réalisé en deux parties, comprenant un premier élément de pont de paliers (22.1) et un deuxième élément de pont de paliers (22.2), le premier élément de pont de paliers (22.1) comportant des conduits (33), qui sont reliés sur le plan hydraulique à un dispositif de commande (23) de la transmission hydrostatique (4), en vue de la modification du volume de refoulement et/ou d'absorption des unités hydrostatiques (13, 14), et comportant les premiers logements de paliers (28), le deuxième élément de pont de paliers (22.2) comportant les conduits (34) du pont de paliers (22), destinés à la transmission de la puissance d'entraînement, et les deuxièmes logements de paliers (29).

8. Transmission hydromécanique (2) selon la revendication 7, **caractérisée en ce que** le pont de paliers (22) comprend deux troisièmes logements de paliers (30) espacés l'un de l'autre, des axes (31) qui passent au centre des troisièmes logements de paliers (30) étant orientés parallèlement l'un à l'autre, chacun des troisièmes logements de paliers (30) accueillant des éléments de l'unité hydrostatique (13, 14) qui sont en liaison fonctionnelle avec la transmission mécanique (3) par l'intermédiaire d'un dispositif d'accouplement (12.1, 12.2), les troisièmes logements de paliers (30) étant espacés l'un de l'autre par une entretoise (32), la division du pont de paliers (22) passant par l'entretoise (32) et les troisièmes logements de paliers (30) du pont de paliers (22), les axes (31) des troisièmes logements de paliers (30) se situant de préférence dans le plan de division.

9. Transmission hydromécanique (2) selon une des revendications 1 à 8, **caractérisée en ce que** la transmission hydrostatique (4) comprend des éléments amortisseurs (42) qui relient la transmission hydrostatique (4) de manière souple au carter de transmission, les éléments amortisseurs (42) comportant respectivement un axe (43) entouré par un manchon élastique, l'axe (43) de chaque élément amortisseur (42) étant de préférence réalisé d'une seule pièce avec le pont de paliers (22).

10. Transmission hydromécanique (2) selon la revendication 9, **caractérisée en ce que** les éléments amortisseurs (42) sont réalisés sur le deuxième élément de pont de paliers (22.2), les éléments amortisseurs (42) étant orientés avec leurs axes parallèlement aux axes (31) des troisièmes logements de paliers (30).

11. Transmission hydromécanique (2) selon la revendications 9 ou 10, **caractérisée en ce que** la transmission hydrostatique (4) présente quatre éléments amortisseurs (42), sachant qu'un autre élément des quatre éléments amortisseurs (42) est disposé en étant espacé dans deux directions spatiales par rapport à chacun des quatre éléments amortisseurs (42), l'ensemble des quatre éléments amortisseurs (42) étant disposés dans un plan défini par les deux directions spatiales, le plan passant de préférence par les deuxièmes logements de paliers (29), en particulier parallèlement au plan de division du pont de paliers (22).

12. Machine de travail agricole (1), en particulier un tracteur, comprenant une transmission hydromécanique (2), **caractérisée en ce que** la transmission hydromécanique (2) est réalisée conformément à l'une des revendications 1 à 11.
